# EUROPEAN PATENT SPECIFICATION

(11) **EP 3 831 617 B1**
(45) Date of publication and mention of the grant of the patent: **01.10.2025**
(21) Application number: 20207384.7
(22) Date of filing: 13.11.2020
(51) Int. Cl.: B60C 1/00, C08L 9/06

(54) **TREAD**
LAUFFLÄCHE
BANDE DE ROULEMENT

(30) Priority: 05.12.2019 JP 2019220342
(43) Date of publication of application: 09.06.2021
(73) Proprietor: Sumitomo Rubber Industries, Ltd., Kobe-shi, Hyogo 651-0072 (JP)
(72) Inventor: SUZUKI, Yumi, Kobe-shi,, Hyogo 651-0072 (JP)
(74) Representative: TBK

(56) References cited:
- EP-A1- 2 944 669
- EP-A1- 2 985 310
- EP-A1- 3 081 587
- EP-A1- 3 511 179
- EP-A1- 3 552 840
- EP-A1- 3 575 330

## Description

### TECHNICAL FIELD

The present invention relates to tires.

### BACKGROUND ART

Attempts have been made to enhance wet grip performance by incorporating aluminum hydroxide or a resin or by incorporating a large amount of silica. However, these techniques have the drawback of deteriorated abrasion resistance. Thus, abrasion resistance and wet grip performance have a trade-off relationship, and it is difficult at present to achieve both properties simultaneously.

EP 3 575 330 A1 provides a rubber composition for tires, containing a rubber component and a terpene-based resin, the rubber component including, based on 100% by mass thereof, 5-100% by mass of styrene butadiene rubber and 0-80% by mass of polybutadiene rubber, with a combined amount of the styrene butadiene rubber and the polybutadiene rubber of 80% by mass or more, the terpene-based resin having a softening point of 70-150°C, an α-pinene unit content of 65-100% by mass, a β-pinene unit content of 0-35% by mass, and a limonene unit content of 10% by mass or lower, the rubber composition containing, per 100 parts by mass of the rubber component, 0-500 parts by mass of silica and 0.1-100 parts by mass of the terpene-based resin.

EP 3 552 840 A1 relates to a tire including a rubber composition, containing, based on 100% by mass of a rubber component therein: 3-25% by mass of a component derived from an aromatic vinyl monomer; 0-15% by mass of a component derived from a butadiene monomer and having a vinyl configuration; 1-90% by mass of a component derived from a butadiene monomer and having a cis configuration; and 1-6% by mass of a component derived from an isoprene monomer and having a cis configuration, the rubber composition having, after vulcanization, physical properties satisfying the following relationships (1) and (2): -25°C < Tg < 0°C; and 65 < Hs < 75.

EP 2 985 310 A1 relates to a pneumatic tire including a tread and a wing or sidewall adjacent to the tread, wherein the tread is formed from a tread rubber composition that has an amount of aluminum hydroxide having an average particle size of 0.69 µm or smaller and a N₂SA of 10-50 m²/g of 1-60 parts by mass, and a net sulfur content derived from crosslinking agents of 0.56-1.25 parts by mass, each per 100 parts by mass of the rubber component, the wing or sidewall is formed from a wing or sidewall rubber composition that has a net sulfur content derived from crosslinking agents of 1.3-2.5 parts by mass per 100 parts by mass of the rubber component, and the net sulfur contents derived from crosslinking agents in the tread rubber composition and the wing or sidewall rubber composition satisfy a specific relationship.

EP 2 944 669 A1 relates to a rubber composition, containing a rubber component made of an oil-extended butadiene rubber having a cis content of 95 mol% or greater, a vinyl content of 1.2 mol% or less and a weight-average molecular weight of 530,000 or greater, and/or a styrene-butadiene rubber having a bound styrene content of 10~60 mass% and a weight-average molecular weight of 800,000 or greater; an inorganic reinforcement agent represented by the formula below and having a nitrogen adsorption specific surface area of 10~60 m²/g or greater; and silica having a nitrogen adsorption specific surface area of 100 m²/g or greater and/or carbon black having a nitrogen adsorption specific surface area of 100 m²/g or greater.

EP 3 081 587 A1 relates to a pneumatic tire including a tread formed from a rubber composition for tires, the rubber composition containing a rubber component, an inorganic reinforcing agent of the formula below having an average particle size of 1.5 µm or less and a N₂SA of 3-120 m²/g, wet silica, and a coumarone-indene resin having a softening point of -20°C to 45°C and/or a terpene-based resin having a softening point of 100-170°C, the rubber composition containing 1-60 parts by mass of the inorganic reinforcing agent per 100 parts by mass of the rubber component, kM₁·xSiO_{y}·zH₂O wherein M₁ represents at least one metal selected from the group consisting of Al, Mg, Ti, Ca, and Zr, or an oxide or hydroxide of the metal; k represents an integer of 1-5; x represents an integer of 0-10; y represents an integer of 2-5; and z represents an integer of 0-10.

EP 3 511 179 A1 relates to a rubber composition for a tread includes: 80 to 150 parts by mass of an inorganic filler including silica, with respect to 100 parts by mass of a rubber component that includes 35 to 65% by mass of styrene butadiene rubber and 35 to 65% by mass of butadiene rubber; and 0.3 to 40 parts by mass of a rosin-based resin with respect to 100 parts by mass of the rubber component.

### SUMMARY OF INVENTION

### TECHNICAL PROBLEM

As a result of extensive research on the problem it is difficult to achieve both abrasion resistance and wet grip performance, which have a trade-off relationship, the present inventor has found that it is in particular very difficult to achieve both abrasion resistance during high speed driving and wet grip performance during high speed driving because the conventional techniques, such as incorporating a large amount of silica, tend to cause a temperature increase during high speed driving, resulting in greatly reduced abrasion resistance.

The present invention aims to solve the new problem discovered by the present inventor and provide tires having excellent overall performance in terms of abrasion resistance during high speed driving and wet grip performance during high speed driving.

### SOLUTION TO PROBLEM

The present invention relates to a tire, including a tread including a tire rubber composition, the tire rubber composition containing a rubber component including styrene-butadiene rubber and aluminum hydroxide, the tire rubber composition containing, per 100 parts by mass of the rubber component, 150 parts by mass or more of a white filler and 30 parts by mass or more of a resin, wherein the tread comprises a first layer comprising the tire rubber composition and a second layer comprising a second layer rubber composition which is different from the tire rubber composition and wherein a thickness of the first layer is greater than a thickness of the second layer.

Preferably, the resin incudes a terpene resin or a styrene resin.

Preferably, the rubber composition contains 20 parts by mass or more of a styrene resin per 100 parts by mass of the rubber component, and the styrene-butadiene rubber has an average styrene content of 30% by mass or higher.

Preferably, the rubber composition contains 20 parts by mass or more of a terpene resin per 100 parts by mass of the rubber component, and the styrene-butadiene rubber has an average styrene content of lower than 20% by mass.

Preferably, the rubber composition contains 100 parts by mass or more of silica, more preferably 120 parts by mass or more of silica, still more preferably 150 parts by mass or more of silica, per 100 parts by mass of the rubber component.

Preferably, the rubber composition contains a sulfide silane coupling agent.

Preferably, the rubber composition contains an ester plasticizer.

The rubber composition contains aluminum hydroxide.

The tread includes a first layer including the tire rubber composition and a second layer including a second layer rubber composition which is different from the tire rubber composition.

Preferably, the second layer rubber composition contains silica.

Preferably, the following relationship is satisfied: (Amount (phr) of silica in first layer) - (Amount (phr) of silica in second layer) > 100.

A thickness of the first layer is greater than a thickness of the second layer.

Preferably, a ratio of a thickness of the thicker of the first and second layers to a total thickness of the first and second layers is higher than 0.55.

### ADVANTAGEOUS EFFECTS OF INVENTION

The tires of the present invention include a tread including a tire rubber composition which contains a rubber component including styrene-butadiene rubber and aluminum hydroxide, and which contains, per 100 parts by mass of the rubber component, 150 parts by mass or more of a white filler and 30 parts by mass or more of a resin, wherein the tread comprises a first layer comprising the tire rubber composition and a second layer comprising a second layer rubber composition which is different from the tire rubber composition and wherein a thickness of the first layer is greater than a thickness of the second layer. Such tires have excellent overall performance in terms of abrasion resistance during high speed driving and wet grip performance during high speed driving.

### DESCRIPTION OF EMBODIMENTS

The tires of the present invention include a tread including a tire rubber composition which contains a rubber component including styrene-butadiene rubber and aluminum hydroxide and which contains, per 100 parts by mass of the rubber component, 150 parts by mass or more of a white filler and 30 parts by mass or more of a resin, wherein the tread comprises a first layer comprising the tire rubber composition and a second layer comprising a second layer rubber composition which is different from the tire rubber composition and wherein a thickness of the first layer is greater than a thickness of the second layer. Thus, it is possible to improve overall performance in terms of abrasion resistance during high speed driving and wet grip performance during high speed driving.

The tires including a tread including the tire rubber composition have the above-mentioned advantageous effect. The reason for the advantageous effect is not exactly clear but may be explained as follows.

The tire rubber composition contains a rubber component including styrene-butadiene rubber and aluminum hydroxide, and contains, per 100 parts by mass of the rubber component, 150 parts by mass or more of a white filler and 30 parts by mass or more of a resin.

When a combination of SBR and a resin is used in a rubber composition containing a large amount of a white filler, the resin has good dispersibility, and the overall performance in terms of abrasion resistance during high speed driving and wet grip performance during high speed driving can be synergistically improved.

Chemicals which may be used in the rubber composition are described below.

The rubber component of the tire rubber composition includes styrene-butadiene rubber (SBR).

Any SBR may be used, and examples include those commonly used in the tire industry, such as emulsionpolymerized SBR (E-SBR) and solution-polymerized SBR (S-SBR). These may be used alone or in combinations of two or more. S-SBR is preferred among these.

The SBR preferably has an average styrene content of 5% by mass or higher, more preferably 10% by mass or higher, still more preferably 15% by mass or higher, particularly preferably 20% by mass or higher, most preferably 25% by mass or higher, further preferably 30% by mass or higher, further preferably 35% by mass or higher, further preferably 38% by mass or higher, but preferably 50% by mass or lower, more preferably 47% by mass or lower, still more preferably 45% by mass or lower. When the average styrene content is within the range indicated above, the advantageous effect tends to be more suitably achieved.

For the rubber composition containing a plurality of SBRs, the term "average styrene content" herein refers to the average styrene content of the plurality of SBRs. For the rubber composition containing only one type of SBR, the term refers to the styrene content of the said SBR. The average styrene content of the SBR is expressed by the formula: {Σ(Amount of each SBR × Styrene content of each SBR)}/Total amount of total SBR. For example, if the rubber component contains 90% by mass of SBR(A) (styrene content 40% by mass), 5% by mass of SBR(B) (styrene content 25% by mass), and 5% by mass of BR, the average styrene content is 39.21% by mass (= (90 × 40 + 5 × 25)/(90 + 5)).

The SBR may include a nonmodified or modified SBR.

The modified SBR may be any SBR having a functional group interactive with a filler such as silica. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group, and at least one chain end is modified with the modifier); or a chain end-modified SBR that has been modified (coupled) with a polyfunctional compound having two or more epoxy groups in the molecule so that a hydroxyl or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups.

SBR products manufactured or sold by Sumitomo Chemical Co., Ltd., JSR Corporation, Asahi Kasei Corporation, Zeon Corporation, Lanxess, etc. may be used as the SBR.

The amount of the SBR based on 100% by mass of the rubber component is preferably 20% by mass or more, more preferably 40% by mass or more, still more preferably 60% by mass or more, particularly preferably 80% by mass or more, most preferably 90% by mass or more, and may be 100% by mass. When the amount is within the range indicated above, the advantageous effect tends to be better achieved.

Examples of rubbers other than SBR which may be used in the rubber component include diene rubbers such as isoprene-based rubbers, polybutadiene rubber (BR), styrene-isoprene-butadiene rubber (SIBR), acrylonitrile-butadiene rubber (NBR), chloroprene rubber (CR), and butyl rubber (IIR). The rubbers may be used alone or in combinations of two or more. Diene rubbers are preferred among these, with isoprene-based rubbers or BR being more preferred.

The rubber component preferably includes a rubber having a weight average molecular weight (Mw) of 150,000 or more, more preferably 350,000 or more. The upper limit of the Mw is not limited, but is preferably 4,000,000 or less, more preferably 3,000,000 or less.

Examples of the isoprene-based rubbers include natural rubber (NR), polyisoprene rubber (IR), refined NR, modified NR, and modified IR. The NR may be one commonly used in the tire industry such as SIR20, RSS#3, or TSR20. Any IR may be used, and examples include those commonly used in the tire industry such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more. NR is preferred among these.

Any BR may be used, and examples include those commonly used in the tire industry, such as high-cis BR having a high cis content, low-cis BR having a low cis content, BR containing syndiotactic polybutadiene crystals, and BR synthesized using rare earth catalysts (rare earthcatalyzed BR). Crystalline BR such as syndiotactic 1,2-polybutadiene may also be used. These may be used alone or in combinations of two or more.

The BR may be commercially available from Ube Industries, Ltd., JSR Corporation, Asahi Kasei Corporation, Zeon Corporation, etc.

Herein, the weight average molecular weight (Mw) and the number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The styrene content may be measured by ¹H-NMR analysis.

The rubber composition contains a resin.

Any resin may be used, and examples include alkylphenol resins, styrene resins, coumarone-indene resins, terpene resins, rosin resins, acrylic resins, dicyclopentadiene resins (DCPD resins), C5 resins, and C9 resins. These may be used alone or in combinations of two or more. Styrene resins or terpene resins are preferred among these, with styrene resins being more preferred.

The resin preferably has a softening point of 20°C or higher, more preferably 60°C or higher, but preferably 200°C or lower, more preferably 160°C or lower, still more preferably 140°C or lower, particularly preferably 130°C or lower. When the softening point is within the range indicated above, the advantageous effect tends to be better achieved.

Herein, the softening point of the resin is determined in accordance with JIS K 6220-1:2001 using a ring and ball softening point measuring apparatus and defined as the temperature at which the ball drops down.

The resin may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The amount of the resin per 100 parts by mass of the rubber component is 30 parts by mass or more, preferably 40 parts by mass or more. The amount is also preferably 80 parts by mass or less, more preferably 70 parts by mass or less, still more preferably 65 parts by mass or less. When the amount is within the range indicated above, the advantageous effect tends to be better achieved.

Despite the fact that incorporating a large amount of silica tends to cause a temperature increase during high speed driving, resulting in greatly reduced abrasion resistance, the present inventor has found that, by incorporating a resin together with a large amount of silica, abrasion resistance can be extremely reduced when the tire temperature reaches about the softening point of the resin during high speed driving.

As a result of further extensive research, the present inventor has found the following.
(1) For the styrene-butadiene rubber having a high average styrene content, a styrene resin may be incorporated to allow the SBR to be compatible with the resin so that a high and sharp tan δ peak can be obtained, thereby achieving both wet grip performance and abrasion resistance during high speed driving. Thus, the overall performance in terms of abrasion resistance during high speed driving and wet grip performance during high speed driving can be improved.
(2) For the styrene-butadiene rubber having a low average styrene content, a terpene resin may be incorporated to allow the SBR to be compatible with the resin so that a high and sharp tan δ peak can be obtained, thereby achieving both wet grip performance and abrasion resistance during high speed driving. Thus, the overall performance in terms of abrasion resistance during high speed driving and wet grip performance during high speed driving can be improved.

To be more specific on the finding (1), for the styrene-butadiene rubber having an average styrene content of 30% by mass or higher, it is preferred to incorporate a styrene resin.

The SBR used here preferably has an average styrene content of 35% by mass or higher, more preferably 38% by mass or higher, but preferably 50% by mass or lower, more preferably 47% by mass or lower, still more preferably 45% by mass or lower. When the average styrene content is within the range indicated above, the advantageous effect tends to be better achieved.

The amount of the styrene resin per 100 parts by mass of the rubber component is preferably 20 parts by mass or more, more preferably 30 parts by mass or more, still more preferably 40 parts by mass or more. The amount is also preferably 80 parts by mass or less, more preferably 70 parts by mass or less, still more preferably 65 parts by mass or less. When the amount is within the range indicated above, the advantageous effect tends to be better achieved.

To be more specific on the finding (2), for the styrene-butadiene rubber having an average styrene content of lower than 20% by mass, it is preferred to incorporate a terpene resin.

The SBR used here preferably has an average styrene content of 5% by mass or higher, more preferably 10% by mass or higher, still more preferably 15% by mass or higher. When the average styrene content is within the range indicated above, the advantageous effect tends to be better achieved.

The amount of the terpene resin per 100 parts by mass of the rubber component is preferably 20 parts by mass or more, more preferably 30 parts by mass or more, still more preferably 40 parts by mass or more. The amount is also preferably 80 parts by mass or less, more preferably 70 parts by mass or less, still more preferably 65 parts by mass or less. When the amount is within the range indicated above, the advantageous effect tends to be better achieved.

By combining a highly compatible resin selected depending on the average styrene content of the SBR, it is possible to achieve both abrasion resistance during high speed driving and wet grip performance during high speed driving. This permits the white filler or resin to be incorporated in a large amount. Thus, the overall performance in terms of abrasion resistance during high speed driving and wet grip performance during high speed driving can be further improved.

The term "styrene resin" refers to a polymer containing a styrenic monomer as a structural monomer, and examples include polymers produced by polymerizing styrenic monomers as main components (at least 50% by mass). Specific examples include homopolymers produced by polymerizing a single styrenic monomer (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers produced by copolymerizing two or more styrenic monomers, and copolymers of styrenic monomers and additional monomers copolymerizable therewith. These may be used alone or in combinations of two or more.

Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; conjugated dienes such as terpene compounds, chloroprene, butadiene, and isoprene; olefins such as 1-butene and 1-pentene; and α,β-unsaturated carboxylic acids and acid anhydrides thereof such as maleic anhydride. These may be used alone or in combinations of two or more.

The styrene resin is preferably an α-methylstyrene resin (e.g., α-methylstyrene homopolymer, or copolymer of α-methylstyrene and styrene) or a copolymer of a styrenic monomer and a terpene compound, more preferably an α-methylstyrene resin, because the above-mentioned overall performance tends to be better. The α-methylstyrene resin is more preferably a copolymer of α-methylstyrene and styrene.

The styrene resin preferably has a softening point of 60°C or higher, more preferably 75°C or higher, but preferably 160°C or lower, more preferably 120°C or lower, still more preferably 95°C or lower. When the softening point is within the range indicated above, the advantageous effect tends to be more suitably achieved.

The term "terpene resin" refers to a polymer containing a terpene compound as a structural monomer, and examples include polymers produced by polymerizing terpene compounds as main components (at least 50% by mass). Specific examples include polyterpene resins produced by polymerizing terpene compounds, and aromatic modified terpene resins produced by polymerizing terpene compounds and aromatic compounds. Hydrogenated products of these resins may also be used. These may be used alone or in combinations of two or more. Polyterpene resins are preferred among these.

Polyterpene resins refer to resins produced by polymerizing terpene compounds. Terpene compounds refer to hydrocarbons having a composition represented by (C₅H₈)ₙ or oxygen-containing derivatives thereof, all of which have a terpene backbone and are classified into monoterpenes (C₁₀H₁₆), sesquiterpenes (C₁₅H₂₄), diterpenes (C₂₀H₃₂), etc. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, i.e., α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from terpene compounds and phenolic compounds, and terpene-styrene resins made from terpene compounds and styrene compounds. Terpene-phenol-styrene resins made from terpene compounds, phenolic compounds, and styrene compounds may also be used.

The softening point of the terpene resin used is preferably 100°C or higher, more preferably 120°C or higher, but is preferably 160°C or lower, more preferably 130°C or lower. When the softening point is within the range indicated above, the advantageous effect tends to be more suitably achieved.

The rubber composition contains a white filler.

The white filler may be one commonly used in the rubber industry, examples of which include silica, calcium carbonate, mica such as sericite, aluminum hydroxide, magnesium oxide, magnesium hydroxide, clay, talc, alumina, titanium oxide, and magnesium sulfate. These may be used alone or in combinations of two or more. Aluminum hydroxide is comprised in the tire rubber composition, with a combination of silica and aluminum hydroxide being preferred.

The amount of the white filler (preferably, the combined amount of silica and aluminum hydroxide) per 100 parts by mass of the rubber component is 150 parts by mass or more, preferably 155 parts by mass or more, more preferably 160 parts by mass or more, still more preferably 170 parts by mass or more, particularly preferably 180 parts by mass or more, most preferably 185 parts by mass or more, but is preferably 200 parts by mass or less, more preferably 195 parts by mass or less, still more preferably 190 parts by mass or less. When the amount is within the range indicated above, the advantageous effect tends to be better achieved.

Examples of the silica include dry silica (silicic anhydride) and wet silica (hydrous silicic acid). Wet silica is preferred because it has a large number of silanol groups. These may be used alone or in combinations of two or more.

The silica has a nitrogen adsorption specific surface area (N₂SA) of 40 m²/g or more, preferably 50 m²/g or more, more preferably 100 m²/g or more, still more preferably 130 m²/g or more, particularly preferably 160 m²/g or more. The N₂SA is also preferably 500 m²/g or less, more preferably 300 m²/g or less, still more preferably 250 m²/g or less, particularly preferably 200 m²/g or more. When the N₂SA is within the range indicated above, the advantageous effect tends to be more suitably achieved.

The N₂SA of the silica is measured by the BET method in accordance with ASTM D3037-81.

The silica may be commercially available from Degussa, Rhodia, Tosoh Silica Corporation, Solvay Japan, Tokuyama Corporation, etc.

The amount of the silica per 100 parts by mass of the rubber component is preferably 100 parts by mass or more, more preferably 105 parts by mass or more, still more preferably 110 parts by mass or more, further preferably 120 parts by mass or more, particularly preferably 140 parts by mass or more, most preferably 150 parts by mass or more, further most preferably 155 parts by mass or more, but is preferably 180 parts by mass or less, more preferably 175 parts by mass or less, still more preferably 170 parts by mass or less, particularly preferably 160 parts by mass or less. When the amount is within the range indicated above, the advantageous effect tends to be better achieved.

Any aluminum hydroxide may be used, and those commonly used in the tire industry may be used. These may be used alone or in combinations of two or more.

The aluminum hydroxide preferably has an average primary particle size of 0.6 µm or greater, more preferably 0.7 µm or greater. The average primary particle size of the aluminum hydroxide is also preferably 10 µm or smaller, more preferably 5 µm or smaller, still more preferably 1.3 µm or smaller, particularly preferably 1.2 µm or smaller. When the average primary particle size is within the range indicated above, the advantageous effect tends to be better achieved.

Herein, the average primary particle size of the aluminum hydroxide refers to the number average particle size measured with a transmission electron microscope.

The amount of the aluminum hydroxide per 100 parts by mass of the rubber component is preferably 10 parts by mass or more, more preferably 20 parts by mass or more. The amount of the aluminum hydroxide is also preferably 60 parts by mass or less, more preferably 40 parts by mass or less. When the amount is within the range indicated above, the advantageous effect tends to be better achieved.

The rubber composition, which contains silica, preferably further contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. For example, commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more. Sulfide silane coupling agents are preferred among these because then the advantageous effect tends to be better achieved.

The amount of the silane coupling agent per 100 parts by mass of the silica is preferably 3 parts by mass or more, more preferably 6 parts by mass or more, but is preferably 20 parts by mass or less, more preferably 15 parts by mass or less, still more preferably 12 parts by mass or less. When the amount is within the range indicated above, the advantageous effect tends to be better achieved.

The rubber composition preferably contains carbon black.

Any carbon black may be used, and examples include N134, N110, N220, N234, N219, N339, N330, N326, N351, N550, and N762. These may be used alone or in combinations of two or more.

The carbon black preferably has a nitrogen adsorption specific surface area (N₂SA) of 80 m²/g or more, more preferably 100 m²/g or more, still more preferably 120 m²/g or more, but preferably 200 m²/g or less, more preferably 180 m²/g or less, still more preferably 155 m²/g or less. When the N₂SA is within the range indicated above, the advantageous effect tends to be better achieved.

Herein, the N₂SA of the carbon black is measured in accordance with JIS K6217-2:2001.

The carbon black preferably has, as an aggregate property, a mode diameter (Dmod) of a Stokes' diameter distribution curve of 120 nm or less, more preferably 80 nm or less. The lower limit of the Dmod is not limited, but is preferably 35 nm or more, more preferably 40 nm or more. When the Dmod is within the range indicated above, the advantageous effect tends to be better achieved.

Herein, the Dmod of the carbon black is determined as follows.

A surfactant ("NONIDET P-40" available from Sigma Chemical) is added to a 20% aqueous solution of ethanol. To the mixture is added an accurately weighed carbon black sample to prepare a sample solution with a carbon black concentration of 0.01% by weight. The sample solution is subjected to a dispersing treatment using an ultrasonic disperser ("ultrasonic generator USV-500V" available from Ultrasonic Engineering Co., Ltd.) at a frequency of 200 kHz and an output power of 100 W for five minutes. Thus, a carbon black slurry is prepared. Separately, 10 mL of a spin liquid (pure water) is poured into a centrifugal particle size distribution analyzer ("BI-DCP PARTICLE SIZER" available from Brookhaven Instruments), and then 1 mL of a buffer solution (a 20 vol% aqueous solution of ethanol) is poured thereinto. Subsequently, 1 mL of each carbon black slurry prepared as above is poured, and the mixture is subjected to centrifugal sedimentation at 8000 rpm to determine a Stokes' diameter. Then, a histogram of the Stokes' diameter versus the relative frequency of occurrence is generated. The intersection of a straight line parallel to the Y-axis and passing through the peak (A) of the histogram with the X-axis of the histogram is designated as C. The Stokes' diameter at the point C is defined as the mode Stokes' diameter (Dmod).

The carbon black preferably has a dibutyl phthalate oil absorption (DBP) of 50 mL/100 g or more, more preferably 100 mL/100 g or more. The DBP is also preferably 200 mL/100 g or less, more preferably 135 mL/100 g or less. When the DBP is within the range indicated above, the advantageous effect tends to be better achieved.

The DBP of the carbon black may be measured in accordance with JIS-K6217-4:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black per 100 parts by mass of the rubber component is preferably 3 parts by mass or more, more preferably 5 parts by mass or more, but is preferably 80 parts by mass or less, more preferably 50 parts by mass or less, still more preferably 30 parts by mass or less, particularly preferably 20 parts by mass or less, most preferably 15 parts by mass or less. When the amount is within the range indicated above, the advantageous effect tends to be better achieved.

The rubber composition preferably contains sulfur as a crosslinking agent (vulcanizing agent).

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

Examples of vulcanizing agents other than sulfur include organic peroxides.

The sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc.

The amount of the vulcanizing agent (preferably sulfur) per 100 parts by mass of the rubber component is preferably 0.1 parts by mass or more, more preferably 0.2 parts by mass or more, still more preferably 0.3 parts by mass or more, particularly preferably 0.5 parts by mass or more, but is preferably 5 parts by mass or less, more preferably 3 parts by mass or less, still more preferably 2 parts by mass or less, particularly preferably 1.5 parts by mass or less. When the amount is within the range indicated above, the advantageous effect tends to be better achieved.

The rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazyl sulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Thiuram and/or guanidine vulcanization accelerators are preferred among these, with combinations of thiuram and guanidine vulcanization accelerators being more preferred.

The vulcanization accelerator may be commercially available from Kawaguchi Chemical Industry Co., Ltd., Ouchi Shinko Chemical Industrial Co., Ltd., Rhein Chemie, etc.

The amount of the vulcanization accelerator per 100 parts by mass of the rubber component is preferably 0.5 parts by mass or more, more preferably 1 part by mass or more, still more preferably 2 parts by mass or more, but is preferably 10 parts by mass or less, more preferably 5 parts by mass or less. When the amount is within the range indicated above, the advantageous effect tends to be better achieved.

The rubber composition may contain a softener.

Any softener may be used, and examples include oils, liquid diene polymers, and ester plasticizers. These may be used alone or in combinations of two or more. Oils or ester plasticizers are preferred among these, with ester plasticizers being more preferred. Combinations of oils and ester plasticizers are also preferred.

Examples of the oils include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. To better achieve the advantageous effect, process oils are preferred among these, with aromatic process oils being more preferred.

The oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

The amount of oils per 100 parts by mass of the rubber component is preferably 5 parts by mass or more, more preferably 15 parts by mass or more, still more preferably 30 parts by mass or more, particularly preferably 50 parts by mass or more, but is preferably 150 parts by mass or less, more preferably 145 parts by mass or less, still more preferably 140 parts by mass or less, particularly preferably 120 parts by mass or less, most preferably 100 parts by mass or less. When the amount is within the range indicated above, the advantageous effect tends to be better achieved.

Herein, the amount of oils includes the amount of the oils contained in the rubbers (oil extended rubbers), if used.

Liquid diene polymers refer to diene polymers that are liquid at room temperature (25°C).

The weight average molecular weight (Mw) of the liquid diene polymers is preferably 3.0 × 10³ or more, more preferably 4.0 × 10³ or more, but is preferably 1.0 × 10⁵ or less, more preferably 1.5 × 10⁴ or less. When the Mw is within the range indicated above, the advantageous effect tends to be more suitably achieved.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR). These may be used alone or in combinations of two or more. To more suitably achieve the advantageous effect, liquid SBR is preferred among these.

The liquid diene polymers may be commercially available from Sartomer, Kuraray Co., Ltd., etc.

Suitable examples of ester plasticizers include at least one compound selected from the group consisting of phosphoric acid esters, phthalic acid esters, aliphatic polybasic acid esters, trimellitic acid esters, acetic acid esters, and ricinoleic acid esters. These may be used alone or in combinations of two or more. To better achieve the advantageous effect, phosphoric acid esters, phthalic acid esters, and aliphatic polybasic acid esters are preferred among these. Aliphatic polybasic acid esters are suitable because the amount of phosphorus used can also be reduced.

The specified compound(s) preferably has an SP value of 8.3 or higher, more preferably 8.5 or higher. The SP value is also preferably 9.5 or lower, more preferably 9.0 or lower, still more preferably 8.8 or lower. An SP value within the range indicated above tends to ensure compatibility with diene rubbers such as SBR, so that the advantageous effect tends to be more suitably achieved.

The term "SP value" refers to a solubility parameter calculated using the Hansen's equation.

The specified compound(s) preferably has a freezing point of -100°C or higher, more preferably -80°C or higher. The freezing point is also preferably -10°C or lower, more preferably -15°C or lower. When the freezing point is within the range indicated above, the advantageous effect tends to be better achieved.

Herein, the freezing point is measured as follows.

A sample is hermetically sealed in an aluminum cell, and the aluminum cell is inserted into a sample holder of a differential scanning calorimeter (DSC-60A available from Shimadzu Corporation). Then, an endothermic peak is observed while heating the sample holder up to 150°C at a rate of 10°C/min in a nitrogen atmosphere. The determined endothermic peak is defined as the freezing point.

Examples of the phosphoric acid esters include known phosphoric acid ester plasticizers such as mono-, di-, or triesters of phosphoric acid with C1-C12 monoalcohols or their (poly)oxyalkylene adducts. Specific examples include tris(2-ethylhexyl)phosphate, trimethyl phosphate, triethyl phosphate, tributyl phosphate, triphenyl phosphate, tricresyl phosphate, trixylenyl phosphate, cresyl diphenyl phosphate, and 2-ethylhexyl diphenyl phosphate.

Examples of the phthalic acid esters include known phthalic acid ester plasticizers such as diesters of phthalic acid with alcohols having approximately 1 to 13 carbon atoms. Specific examples include bis(2-ethylhexyl)phthalate, dimethyl phthalate, diethyl phthalate, dibutyl phthalate, diisodecyl phthalate, butyl benzyl phthalate, diisononyl phthalate, and ethyl phthalyl ethyl glycolate.

Examples of the aliphatic polybasic acid esters include aliphatic dibasic acid esters and aliphatic tribasic acid esters. To better achieve the advantageous effect, aliphatic dibasic acid esters such as adipic acid esters, azelaic acid esters, sebacic acid esters, maleic acid esters, and fumaric acid esters are preferred among these.

Among these aliphatic dibasic acid esters, compounds represented by the following formula (1) can be particularly suitably used.

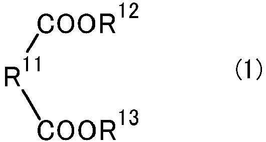

In formula (1), R¹¹ represents a saturated or unsaturated divalent hydrocarbon group, and R¹² and R¹³ are the same or different and each represent a branched or unbranched alkyl group or a group represented by -(R¹⁴-O)ₙ-R¹⁵ wherein the R¹⁴ groups, the number of which is n, are the same or different and each represent a branched or unbranched alkylene group, R¹⁵ represents a branched or unbranched alkyl group, and n represents an integer.

The saturated or unsaturated divalent hydrocarbon group for R¹¹ may be branched or unbranched, and examples include alkylene groups, alkenylene groups, and arylene groups. The saturated or unsaturated hydrocarbon group preferably has 1 to 10 carbon atoms, more preferably 6 to 10 carbon atoms. Specific examples of such alkylene groups include methylene, ethylene, propylene, butylene, pentylene, hexylene, heptylene, octylene, nonylene, and decylene groups. Specific examples of such alkenylene groups include vinylene, 1-propenylene, and 2-propenylene groups. Specific examples of such arylene groups include phenylene, tolylene, and xylylene groups.

The branched or unbranched alkyl group for R¹² or R¹³ preferably has 1 to 15 carbon atoms. The lower limit of the number of carbon atoms is more preferably 4 or more, while the upper limit is more preferably 10 or less. Specific examples include methyl, ethyl, n-propyl, isopropyl, n-butyl, iso-butyl, sec-butyl, tert-butyl, pentyl, hexyl, heptyl, octyl, ethylhexyl, nonyl, and decyl groups.

In the group: -(R¹⁴-O)ₙ-R¹⁵ for R¹² or R¹³, the branched or unbranched alkylene group for R¹⁴ preferably has 1 to 3 carbon atoms. The branched or unbranched alkyl group for R¹⁵ preferably has 1 to 10 carbon atoms. The lower limit of the number of carbon atoms is more preferably 2 or more, while the upper limit is more preferably 6 or less. Specific examples of the alkylene group and the alkyl group include those listed above. The integer n is preferably 1 to 10, more preferably 1 to 5, still more preferably 1 to 3.

To more suitably achieve the advantageous effect, R¹¹ is preferably an alkylene group, and preferably at least one, more preferably both, of R¹² and R¹³ is a branched alkyl group.

Suitable examples of the aliphatic dibasic acid esters of formula (1) include bis(2-ethylhexyl) sebacate, di-n-butyl adipate, and diisobutyl adipate, as well as bis(alkoxyalkoxyalkyl) adipates having the group: -(R¹⁴-O)ₙ-R¹⁵ such as bis[2-(2-butoxyethoxy)ethyl] adipate. These may be used alone or in combinations of two or more.

Examples of the trimellitic acid esters include known trimellitic acid ester plasticizers such as triesters of trimellitic acid with C8-C13 saturated aliphatic alcohols. Specific examples include tri-2-ethylhexyl trimellitate, tri-n-octyl trimellitate, tridecyl trimellitate, triisodecyl trimellitate, and di-n-octyl-n-decyl trimellitate.

Examples of the acetic acid esters include known acetic acid ester plasticizers such as esters of acetic acid with mono- or polyglycerol. Specific examples include glyceryl triacetate, 2-ethylhexyl acetate, and polyglycerol acetate having a degree of polymerization of polyglycerol of 2 to 4 and a percentage of acetylation of 50 to 100%.

Examples of the ricinoleic acid esters include known ricinoleic acid ester plasticizers such as alkyl acetyl ricinoleates (alkyl group: C1 to C10 alkyl group), e.g., methyl acetyl ricinoleate and butyl acetyl ricinoleate.

The ester plasticizers may include other components in addition to the specified compounds. Examples of such other components include known plasticizers other than the specified compounds, and polyalkylene glycol alkyl ethers such as diethylene glycol monobutyl ether.

The proportion of the specified compounds based on 100% by mass of the ester plasticizers is preferably 80% by mass or higher, more preferably 90% by mass or higher, and may be 100% by mass. When the specified compounds are present in a proportion indicated above, the advantageous effect tends to be more suitably achieved.

Examples of the ester plasticizers include tris(2-ethylhexyl) phosphate (TOP, freezing point: -70°C or lower, flash point: 204°C, SP value: 8.1, Mw: 435), bis(2-ethylhexyl) sebacate (DOS, freezing point: -62°C, flash point: 222°C, SP value: 8.5, Mw: 427), bis(2-ethylhexyl) phthalate (DOP, freezing point: -51°C, flash point: 218°C, SP value: 8.9, Mw: 391), and bis[2-(2-butoxyethoxyethyl)ethyl] adipate (BXA, freezing point: - 19°C, flash point: 207°C, SP value: 8.7, Mw: 435). Suitable among these are DOS, TOP, and BXA as they are highly compatible with the rubber component and have a flash point of 200°C or higher and a weight average molecular weight as high as 400 or more.

The amount of ester plasticizers per 100 parts by mass of the rubber component is preferably 3 parts by mass or more, more preferably 5 parts by mass or more, still more preferably 10 parts by mass or more, but is preferably 50 parts by mass or less, more preferably 45 parts by mass or less, still more preferably 30 parts by mass or less, particularly preferably 25 parts by mass or less. When the amount is within the range indicated above, the advantageous effect tends to be better achieved.

The amount of the softener (preferably, the combined amount of oils and ester plasticizers) per 100 parts by mass of the rubber component is preferably 8 parts by mass or more, more preferably 20 parts by mass or more, still more preferably 30 parts by mass or more, particularly preferably 50 parts by mass or more, most preferably 70 parts by mass or more, but is preferably 200 parts by mass or less, more preferably 170 parts by mass or less, still more preferably 140 parts by mass or less, particularly preferably 120 parts by mass or less, most preferably 100 parts by mass or less. When the amount is within the range indicated above, the advantageous effect tends to be better achieved.

Herein, the amount of the softener includes the amount of the oils contained in the rubbers (oil extended rubbers), if used.

The ratio of the amount of the resin to the amount of the softener (preferably, the combined amount of oils and ester plasticizers) is preferably 0.2 or higher, more preferably 0.3 or higher, still more preferably 0.4 or higher, further preferably 0.5 or higher, particularly preferably 0.6 or higher, most preferably 0.7 or higher. The upper limit of the ratio is not limited, but is preferably 1.0 or lower, more preferably 0.9 or lower, still more preferably 0.8 or lower. When the ratio is within the range indicated above, the advantageous effect tends to be better achieved.

The ratio of the sum of the amount of the resin and the amount of the softener (preferably, the combined amount of oils and ester plasticizers) to the amount of the white filler is preferably 1.05 or lower, more preferably 0.95 or lower, still more preferably 0.90 or lower, particularly preferably 0.85 or lower. The lower limit of the ratio is not limited, but is preferably 0.40 or higher, more preferably 0.50 or higher, still more preferably 0.60 or higher, particularly preferably 0.70 or higher, most preferably 0.75 or higher. When the ratio is within the range indicated above, the advantageous effect tends to be better achieved.

It is also preferred that the ratio of the amount of the resin to the amount of the softener (preferably, the combined amount of oils and ester plasticizers) is within the range indicated above, and the ratio of the sum of the amount of the resin and the amount of the softener (preferably, the combined amount of oils and ester plasticizers) to the amount of the white filler is within the range indicated above. In this case, the advantageous effect tends to be better achieved.

Herein, the amount of each of the components refers to the amount per 100 parts by mass of the rubber component.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffin waxes being more preferred.

The wax may be commercially available from Ouchi Shinko Chemical Industrial Co., Ltd., Nippon Seiro Co., Ltd., Seiko Chemical Co., Ltd., etc.

The amount of the wax per 100 parts by mass of the rubber component is preferably 0.3 parts by mass or more, more preferably 0.5 parts by mass or more, but is preferably 20 parts by mass or less, more preferably 10 parts by mass or less. When the amount is within the range indicated above, the advantageous effect tends to be better achieved.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)propionate]methane. These may be used alone or in combinations of two or more. Preferred among these are p-phenylenediamine or quinoline antioxidants, with p-phenylenediamine antioxidants being more preferred.

The antioxidant may be commercially available from Seiko Chemical Co., Ltd., Sumitomo Chemical Co., Ltd., Ouchi Shinko Chemical Industrial Co., Ltd., Flexsys, etc.

The amount of the antioxidant per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain stearic acid.

The stearic acid may be a conventional one available from, for example, NOF Corporation, Kao Corporation, FUJIFILM Wako Pure Chemical Corporation, or Chiba Fatty Acid Co., Ltd.

The amount of the stearic acid per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain zinc oxide.

The zinc oxide may be a conventional one available from, for example, Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

In addition to the above-mentioned components, the rubber composition may contain additives commonly used in the tire industry. The amount of each of these additives per 100 parts by mass of the rubber component is preferably 0.1 to 200 parts by mass.

The rubber composition may be prepared, for example, by kneading the components using a rubber kneading machine such as an open roll mill or a Banbury mixer, and then vulcanizing the kneaded mixture.

The kneading conditions are as follows: in a base kneading step of kneading additives other than vulcanizing agents and vulcanization accelerators, the kneading temperature is usually 100 to 180°C, preferably 120 to 170°C, while in a final kneading step of kneading vulcanizing agents and vulcanization accelerators, the kneading temperature is usually 120°C or lower, preferably 80 to 110°C. The composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

The rubber composition may be used in tire components (i.e., as a tire rubber composition), including, for example, treads (cap treads), sidewalls, base treads, undertreads, clinches, bead apexes, breaker cushion rubbers, rubbers for carcass cord topping, insulations, chafers, and innerliners, and side reinforcement layers of run-flat tires. The rubber composition is especially suitable for use in treads.

The tires (e.g., pneumatic tires) of the present invention may be produced from the rubber composition by usual methods. Specifically, the unvulcanized rubber composition containing additives as needed may be extruded into the form of a tire component (in particular, a tread (cap tread)) and then formed and assembled with other tire components in a tire building machine by a usual method to build an unvulcanized tire, which may then be heated and pressurized in a vulcanizer to produce a tire.

Non-limiting examples of the tires include pneumatic tires, solid tires, and airless tires. Pneumatic tires are preferred among these.

The tires are suitable for use as tires for passenger vehicles, large passenger vehicles, large SUVs, trucks and buses, or two-wheeled vehicles, or as racing tires, cold weather tires (winter tires), all-season tires, run-flat tires, aircraft tires, or mining tires, for example. Among these, the tires are more suitable for use as racing tires, especially wet racing tires for wet roads which can exhibit good grip performance on wet roads. Herein, racing tires refer to tires for use in racing such as karting.

The tread includes a first layer including the tire rubber composition described above and a second layer including a second layer rubber composition which is different from the tire rubber composition. The first layer is disposed on the ground contact side while the second layer is disposed on the tire inner side. The first layer is in contact with the second layer. Moreover, another layer may be present closer to the ground contact surface than the first layer, but it is preferred that the first layer forms the ground contact surface. Moreover, another layer may be present closer to the inside of the tire than the second layer. Preferably, the tread includes, more preferably consists essentially of, the first and second layers.

The second layer rubber composition may be any rubber composition that is different from the tire rubber composition described earlier. Regarding compounding ingredients that may be used in the second layer rubber composition, compounding ingredients as described for the tire rubber composition may be used in suitable embodiments as described above. The second layer rubber composition preferably contains silica. Moreover, the amounts of silica, aluminum hydroxide, oils, and ester plasticizers are more preferably as described below. Particularly, the amount of silica is still more preferably as follows.

The amount of silica per 100 parts by mass of the rubber component in the second layer rubber composition is preferably 50 parts by mass or less, more preferably 30 parts by mass or less, still more preferably 10 parts by mass or less, particularly preferably 5 parts by mass or less. Silica may be absent (0 parts by mass), but the amount of silica is preferably 3 parts by mass or more. When the amount is within the range indicated above, the advantageous effect tends to be better achieved.

The amount of aluminum hydroxide per 100 parts by mass of the rubber component in the second layer rubber composition is preferably 50 parts by mass or less, more preferably 30 parts by mass or less, still more preferably 10 parts by mass or less, particularly preferably 5 parts by mass or less. Aluminum hydroxide may be absent (0 parts by mass). When the amount is within the range indicated above, the advantageous effect tends to be better achieved.

The amount of oils per 100 parts by mass of the rubber component in the second layer rubber composition is preferably 5 parts by mass or more, more preferably 10 parts by mass or more, but is preferably 50 parts by mass or less, more preferably 30 parts by mass or less, still more preferably 20 parts by mass or less. When the amount is within the range indicated above, the advantageous effect tends to be better achieved.

The amount of ester plasticizers per 100 parts by mass of the rubber component in the second layer rubber composition is preferably 50 parts by mass or less, more preferably 30 parts by mass or less, still more preferably 10 parts by mass or less, particularly preferably 5 parts by mass or less. Ester plasticizers may be absent (0 parts by mass). When the amount is within the range indicated above, the advantageous effect tends to be better achieved.

The following relationship is preferably satisfied: (Amount (phr) of silica in first layer) - (Amount (phr) of silica in second layer) > 100. The value of [(Amount (phr) of silica in first layer) - (Amount (phr) of silica in second layer)] is more preferably 105 or higher, still more preferably 110 or higher, particularly preferably 115 or higher, most preferably 120 or higher, further most preferably 130 or higher, still further most preferably 140 or higher. The upper limit of the value is not limited, but is preferably 175 or lower, more preferably 170 or lower. When the value is within the range indicated above, the advantageous effect tends to be better achieved. The amount (phr) of silica in the second layer may be absent (0 parts by mass).

Herein, the term "Amount (phr) of silica in first layer" refers to the amount of silica per 100 parts by mass of the rubber component in the tire rubber composition used in the first layer. The term "Amount (phr) of silica in second layer" refers to the amount of silica per 100 parts by mass of the rubber component in the second layer rubber composition used in the second layer.

The thickness of the first layer is greater than the thickness of the second layer. In this case, the advantageous effect tends to better achieved.

Herein, the thicknesses of the first and second layers are measured along the normals of the first and second layers, respectively.

The ratio of the thickness of the thicker of the first and second layers to the total thickness of the first and second layers is preferably higher than 0.55. Preferably, the ratio of the thickness of the thicker of the first and second layers to the total thickness of the first and second layers is 0.57 or higher, more preferably 0.59 or higher. The upper limit of the ratio is not limited, but is preferably 0.80 or lower, more preferably 0.70 or lower, still more preferably 0.65 or lower. When the ratio is within the range indicated above, the advantageous effect tends to be better achieved.

### EXAMPLES

The present invention is specifically described with reference to, but not limited to, examples.

The chemicals used in the examples and comparative examples are listed below.
SBR 1: T4850 (S-SBR, styrene content: 40% by mass, oil extended rubber containing 50 parts by mass of oil per 100 parts by mass of rubber solids) available from Asahi Kasei Corporation
SBR 2: SL7518 (S-SBR, styrene content: 18% by mass, oil extended rubber containing 15 parts by mass of oil per 100 parts by mass of rubber solids) available from Lanxess
BR: BR150B available from Ube Industries, Ltd.
Silica: Ultrasil VN3 (N₂SA: 175 m²/g) available from Evonik Degussa
Silane coupling agent: Si69 (sulfide silane coupling agent) available from Evonik Degussa
Aluminum hydroxide: HIGILITE H-43 (average primary particle size: 1 µm) available from Showa Denko K.K.
Carbon black: Seast 9 (SAF, N₂SA: 142 m²/g, DBP: 115 mL/100 g) available from Tokai Carbon Co., Ltd.
Oil: VIVATEC 500 (TDAE oil) available from H&R
Styrene resin: Sylvatraxx 4401 (α-methylstyrene resin (copolymer of α-methylstyrene and styrene), softening point: 85°C) available from Arizona Chemical
Terpene resin: TR 7125 (softening point: 125°C, polyterpene) available from Arizona Chemical
Antioxidant: Antigene 6C (N-(1,3-dimethylbutyl)-N'-phenyl-p-phenylenediamine) available from Sumitomo Chemical Co., Ltd.
Wax: SUNNOC N available from Ouchi Shinko Chemical Industrial Co., Ltd.
Ester plasticizer: D.O.S (bis(2-ethylhexyl) sebacate (aliphatic dibasic acid ester, freezing point: -62°C, SP value: 8.5)) available from Daihachi Chemical Industry Co., Ltd.
Stearic acid: stearic acid "TSUBAKI" available from NOF Corporation
Zinc oxide: zinc oxide #2 available from Mitsui Mining & Smelting Co., Ltd.
Sulfur: powdered sulfur available from Karuizawa sulfur Co., Ltd.
Vulcanization accelerator DPG: NOCCELER D (N,N'-diphenylguanidine) available from Ouchi Shinko Chemical Industrial Co., Ltd.
Vulcanization accelerator TOT: NOCCELER TOT-N (tetrakis(2-ethylhexyl)thiuram disulfide) available from Ouchi Shinko Chemical Industrial Co., Ltd.

### (Examples and Comparative Examples)

The chemicals other than the sulfur and vulcanization accelerators according to the formulation shown in Table 1 (first layer rubber composition) were kneaded in a 1.7 L Banbury mixer (Kobe Steel, Ltd.) at 150°C for five minutes to give a kneaded mixture. Then, the sulfur and vulcanization accelerators were added to the kneaded mixture, and they were kneaded in an open roll mill at 80°C for five minutes to prepare an unvulcanized rubber composition. The unvulcanized rubber composition was then formed into the shape of a cap tread (first layer) and assembled with other tire components to build an unvulcanized tire. The unvulcanized tire was vulcanized at 170°C for 10 minutes to prepare a test tire (size: 205/65R15, (Thickness of first layer)/(Total thickness of first and second layers) = 0.60).

Here, the rubber composition used as a second layer rubber composition had the same formulation as in Comparative Example 1 but using 5 parts by mass of the silica, 0 parts by mass of the aluminum hydroxide, 5 parts by mass of the oil, and 0 parts by mass of the ester plasticizer. The tread used consisted essentially of the first layer provided on the ground contact side and the second layer provided on the tire inner side.

The test tires prepared as above were evaluated as described below. Table 1 shows the results.

### <Wet grip performance during high speed driving>

Each set of test tires were mounted on a front-engine, rear-wheel-drive car of 2000 cc displacement made in Japan. A test driver drove the car 10 laps around a wet asphalt test track (high speed driving at an average speed of 120 km/h). Then, the driver subjectively evaluated grip performance during the lap with the best lap time. The results are expressed as an index relative to Comparative Example 1 (= 100). A higher index indicates better wet grip performance during high speed driving.

### <Abrasion resistance during high speed driving>

After the wet grip performance test, the remaining groove depth in the tire tread rubber was measured (groove depth in new tire: 15 mm). The values of the four tires were averaged. The remaining groove depths are expressed as an index relative to Comparative Example 1 (= 100). A higher index indicates better abrasion resistance during high speed driving.

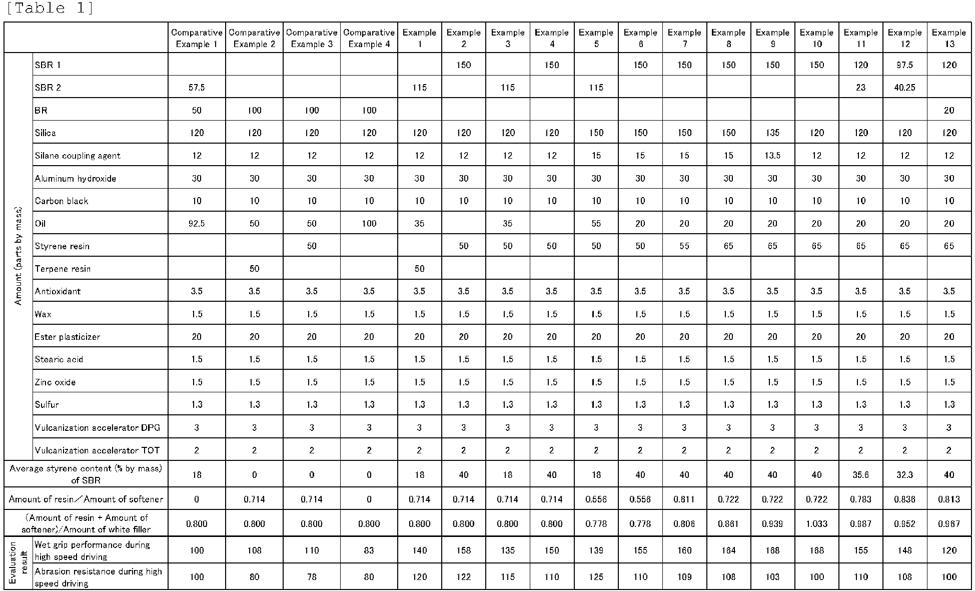

Table 1 shows that excellent overall performance in terms of abrasion resistance during high speed driving and wet grip performance during high speed driving (expressed as the sum of the two indexes: abrasion resistance during high speed driving and wet grip performance during high speed driving) was exhibited in the tires of the examples including a tread including a rubber composition which contained a rubber component including styrene-butadiene rubber and which contained, per 100 parts by mass of the rubber component, 150 parts by mass or more of a white filler and 30 parts by mass or more of a resin.

The present invention aims to provide tires having excellent overall performance in terms of abrasion resistance during high speed driving and wet grip performance during high speed driving.

## Claims

1. A tire, comprising a tread comprising a tire rubber composition,
the tire rubber composition comprising a rubber component comprising styrene-butadiene rubber and aluminum hydroxide,
the tire rubber composition comprising, per 100 parts by mass of the rubber component, 150 parts by mass or more of a white filler and 30 parts by mass or more of a resin,
wherein the tread comprises a first layer comprising the tire rubber composition and a second layer comprising a second layer rubber composition which is different from the tire rubber composition and wherein a thickness of the first layer is greater than a thickness of the second layer.

2. The tire according to claim 1,
wherein the resin comprises a terpene resin or a styrene resin.

3. The tire according to claim 1,
wherein the tire rubber composition comprises 20 parts by mass or more of a styrene resin per 100 parts by mass of the rubber component, and
the styrene-butadiene rubber has an average styrene content of 30% by mass or higher.

4. The tire according to claim 1,
wherein the tire rubber composition comprises 20 parts by mass or more of a terpene resin per 100 parts by mass of the rubber component, and
the styrene-butadiene rubber has an average styrene content of lower than 20% by mass.

5. The tire according to any one of claims 1 to 4,
wherein the tire rubber composition comprises 100 parts by mass or more of silica per 100 parts by mass of the rubber component.

6. The tire according to any one of claims 1 to 4,
wherein the tire rubber composition comprises 120 parts by mass or more of silica per 100 parts by mass of the rubber component.

7. The tire according to any one of claims 1 to 4,
wherein the tire rubber composition comprises 150 parts by mass or more of silica per 100 parts by mass of the rubber component.

8. The tire according to any one of claims 1 to 7,
wherein the tire rubber composition comprises a sulfide silane coupling agent.

9. The tire according to any one of claims 1 to 8,
wherein the tire rubber composition comprises an ester plasticizer.

10. The tire according to any one of claims 1 to 9,
wherein the second layer rubber composition comprises silica.

11. The tire according to any one of claims 1 to 10,
wherein the following relationship is satisfied: (Amount (phr) of silica in first layer) - (Amount (phr) of silica in second layer) > 100.

12. The tire according to any one of any one of claims 1 to 11,
wherein a ratio of a thickness of the thicker of the first and second layers to a total thickness of the first and second layers is higher than 0.55.

## Patentansprüche

1. Reifen, umfassend eine Lauffläche, die eine Reifengummimischung umfasst,
wobei die Reifengummimischung eine Gummikomponente, die einen Styrol-Butadien-Kautschuk umfasst, und Aluminiumhydroxid umfasst,
wobei die Reifengummimischung pro 100 Massenteile der Gummikomponente 150 Massenteile oder mehr eines weißen Füllstoffs und 30 Massenteile oder mehr eines Harzes umfasst,
wobei die Lauffläche eine erste Schicht, die die Reifengummimischung umfasst, und eine zweite Schicht umfasst, die eine zweite Schichtgummimischung umfasst, die sich von der Reifengummimischung unterscheidet, und wobei eine Dicke der ersten Schicht größer ist als eine Dicke der zweiten Schicht.

2. Reifen nach Anspruch 1,
wobei das Harz ein Terpenharz oder ein Styrolharz umfasst.

3. Reifen nach Anspruch 1,
wobei die Reifengummizusammensetzung 20 Massenteile oder mehr eines Styrolharzes pro 100 Massenteile der Gummikomponente umfasst und
der Styrol-Butadien-Kautschuk einen durchschnittlichen Styrolgehalt von 30 Massen-% oder mehr aufweist.

4. Reifen nach Anspruch 1,
wobei die Reifengummimischung 20 Massenteile oder mehr eines Terpenharzes pro 100 Massenteile der Gummikomponente umfasst und
der Styrol-Butadien-Kautschuk einen durchschnittlichen Styrolgehalt von weniger als 20 Massen-% aufweist.

5. Reifen nach einem der Ansprüche 1 bis 4,
wobei die Reifengummimischung 100 Massenteile oder mehr Siliciumdioxid pro 100 Massenteile der Gummikomponente umfasst.

6. Reifen nach einem der Ansprüche 1 bis 4,
wobei die Reifengummimischung 120 Massenteile oder mehr Siliciumdioxid pro 100 Massenteile der Gummikomponente umfasst.

7. Reifen nach einem der Ansprüche 1 bis 4,
wobei die Reifengummimischung 150 Massenteile oder mehr Siliciumdioxid pro 100 Massenteile der Gummikomponente umfasst.

8. Reifen nach einem der Ansprüche 1 bis 7,
wobei die Reifengummimischung ein Sulfidsilan-Haftvermittler umfasst.

9. Reifen nach einem der Ansprüche 1 bis 8,
wobei die Reifengummimischung einen Ester-Weichmacher umfasst.

10. Reifen nach einem der Ansprüche 1 bis 9,
wobei die Gummimischung der zweiten Schicht Siliciumdioxid umfasst.

11. Reifen nach einem der Ansprüche 1 bis 10,
wobei die folgende Beziehung erfüllt ist: (Menge (phr) an Siliciumdioxid in der ersten Schicht) - (Menge (phr) an Siliciumdioxid in der zweiten Schicht) > 100.

12. Reifen nach einem der Ansprüche 1 bis 11,
wobei ein Verhältnis der Dicke der dickeren der ersten und zweiten Schicht zur Gesamtdicke der ersten und zweiten Schicht größer als 0,55 ist.

## Revendications

1. Pneu, comprenant une bande de roulement comprenant une composition de caoutchouc de pneu,
la composition de caoutchouc de pneu comprenant un composant caoutchouc comprenant du caoutchouc styrène-butadiène et de l'hydroxyde d'aluminium,
la composition de caoutchouc de pneu comprenant, pour 100 parties en masse du composant caoutchouc, 150 parties en masse ou plus d'une charge blanche et 30 parties en masse ou plus d'une résine,
dans lequel la bande de roulement comprend une première couche comprenant la composition de caoutchouc de pneu et une seconde couche comprenant une composition de caoutchouc de seconde couche qui est différente de la composition de caoutchouc de pneu et dans lequel une épaisseur de la première couche est plus grande qu'une épaisseur de la seconde couche.

2. Pneu selon la revendication 1,
dans lequel la résine comprend une résine terpénique ou une résine styrénique.

3. Pneu selon la revendication 1,
dans lequel la composition de caoutchouc de pneu comprend 20 parties en masse ou plus d'une résine styrénique pour 100 parties en masse du composant caoutchouc et
le caoutchouc styrène-butadiène a une teneur moyenne en styrène supérieure ou égale à 30 % en masse.

4. Pneu selon la revendication 1,
dans lequel la composition de caoutchouc de pneu comprend 20 parties en masse ou plus d'une résine terpénique pour 100 parties en masse du composant caoutchouc et
le caoutchouc styrène-butadiène a une teneur moyenne en styrène inférieure à 20 % en masse.

5. Pneu selon l'une quelconque des revendications 1 à 4,
dans lequel la composition de caoutchouc de pneu comprend 100 parties en masse ou plus de silice pour 100 parties en masse du composant caoutchouc.

6. Pneu selon l'une quelconque des revendications 1 à 4,
dans lequel la composition de caoutchouc de pneu comprend 120 parties en masse ou plus de silice pour 100 parties en masse du composant caoutchouc.

7. Pneu selon l'une quelconque des revendications 1 à 4,
dans lequel la composition de caoutchouc de pneu comprend 150 parties en masse ou plus de silice pour 100 parties en masse du composant caoutchouc.

8. Pneu selon l'une quelconque des revendications 1 à 7,
dans lequel la composition de caoutchouc de pneu comprend un agent de couplage silane sulfuré.

9. Pneu selon l'une quelconque des revendications 1 à 8,
dans lequel la composition de caoutchouc de pneu comprend un plastifiant ester.

10. Pneu selon l'une quelconque des revendications 1 à 9,
dans lequel la composition de caoutchouc de seconde couche comprend de la silice.

11. Pneu selon l'une quelconque des revendications 1 à 10,
dans lequel la relation suivante est satisfaite : (quantité (phr) de silice dans la première couche) - (quantité (phr) de silice dans la seconde couche) > 100.

12. Pneu selon l'une quelconque des revendications 1 à 11,
dans lequel un rapport d'une épaisseur de la plus épaisse des première et seconde couches sur une épaisseur totale des première et seconde couches est supérieur à 0,55.
